# EUROPEAN PATENT APPLICATION

(11) **EP 4 738 936 A1**
(43) Date of publication of application: **06.05.2026**
(21) Application number: 24882804.8
(22) Date of filing: 23.10.2024
(51) Int. Cl.: H04W 48/18, H04W 48/16, H04W 8/02

(54) **APPARATUS FOR PERFORMING COMMUNICATION, AND OPERATION METHOD THEREOF**

(30) Priority: 23.10.2023 KR 20230142025; 07.11.2023 KR 20230152391
(71) Applicant: Samsung Electronics Co., Ltd., Suwon-si, Gyeonggi-do 16677 (KR)
(72) Inventor: KIENIG, Jan, 00-844 Warsaw (PL); SLOWIKOWSKI, Pawel, 00-844 Warsaw (PL); KWIATKOWSKI, Gracjan, 00-844 Warsaw (PL)
(74) Representative: Gulde & Partner
(86) International application number: PCT/KR2024/016142
(87) International publication number: WO 2025/089777

(57) **Abstract**

This first network entity which performs communication in a wireless communication system supporting a network slice comprises: a memory that stores instructions; a transmission/reception unit; and at least one processor that is operatively connected to the memory and the transmission/reception unit, wherein the at least one processor is configured to execute the instructions that instruct the first network entity to: receive, from a second network entity, a request for activation or deactivation of a network slice instance (NSI) for a first geographical coverage area; retrieve a list including at least one of at least one network slice subnet instance (NSSI) and at least one network slice subnet management function (NSSMF); and transmit, to a third network entity, a request for activating or deactivating the NSSI, wherein each of the at least one NSSI and the at least one NSSMF supports at least one of the first geographical coverage area and an area code list mapped to the first geographic coverage area, and wherein the NSSI is mapped to at least one of the first geographical coverage area and the area code list.

## Description

### [TECHNICAL FIELD]

The disclosure relates to a device for performing communications and a method for operating the same.

### [BACKGROUND ART]

In order to meet the demand for wireless data traffic soaring since the 4G communication system came to the market, there are ongoing efforts to develop enhanced 5G communication systems or pre-5G communication systems. For the reasons, the 5G communication system or pre-5G communication system is called the beyond 4G network communication system or post long-term evolution (LTE) system.

For higher data transmit rates, 5G communication systems are considered to be implemented on ultra-high frequency bands (mm Wave), such as, for example, 60GHz. To mitigate pathloss on the ultra-high frequency band and increase the reach of radio waves, the following techniques are taken into account for the 5G communication system: beamforming, massive multi-input multi-output (MIMO), full dimensional MIMO (FD-MIMO), array antenna, analog beamforming, and large scale antenna.

Also being developed are various technologies for the 5G communication system to have an enhanced network, such as evolved or advanced small cell, cloud radio access network (cloud RAN), ultra-dense network, device-to-device (D2D) communication, wireless backhaul, moving network, cooperative communication, coordinated multi-point (CoMP), and interference cancellation.

There are also other various schemes under development for the 5G system including, for example, hybrid FSK and QAM modulation (FQAM) and sliding window superposition coding (SWSC), which are advanced coding modulation (ACM) schemes, and filter bank multi-carrier (FBMC), non-orthogonal multiple access (NoMA) and sparse code multiple access (SCMA), which are advanced access schemes.

The area of network slicing, which may increase monetization of 5G solutions, is being targeted. Network slicing is a technique that allows creating at least one logically separated network slice using different configurations and quality of service (QoS) requirements on a shared basic infrastructure. In this network slicing technology, however, a method to efficiently activate or deactivate management entities is desired.

### [DISCLOSURE]

### [TECHNICAL SOLUTION]

Provided is a device capable of activating or deactivating a network slice in a selected geographical coverage area and a method for operating the same.

According to one or more embodiments, a first network entity performing communication in a wireless communication system supporting a network slice, includes: a memory storing instructions; a transceiver; and at least one processor operatively connected to the memory and the transceiver, wherein the at least one processor is configured to execute the instructions to cause the first network entity to: receive, from a second network entity, a request to activate or deactivate a network slice instance (NSI) for a first geographical coverage area; search for a list including at least one of: at least one network slice subnet instance (NSSI), or at least one network slice subnet management entity function (NSSMF); and send a request to a third network entity to activate or deactivate an NSSI, wherein the at least one NSSI and the at least one NSSMF each support at least one of: the first geographical coverage area, or an area code list mapped to the first geographical coverage area, and wherein the NSSI is mapped to at least one of: the first geographical coverage area, or the area code list.

According to one or more embodiments, a method performed by a first network entity in a wireless communication system supporting a network slice, includes: receiving, from a second network entity, a request to activate or deactivate a network slice instance (NSI) for a first geographical coverage area; searching for a list including at least one of at least one network slice subnet instance (NSSI) or at least one network slice subnet management entity function (NSSMF); and sending a request to a third network entity to activate or deactivate an NSSI, wherein the at least one NSSI and the at least one NSSMF each support at least one of: the first geographical coverage area, or an area code list mapped to the first geographical coverage area, and wherein the NSSI is mapped to at least one of: the first geographical coverage area, or the area code list.

### [DESCRIPTION OF DRAWINGS]

The above and other aspects, features, and advantages of certain embodiments of the present disclosure are more apparent from the following description taken in conjunction with the accompanying drawings, in which:
FIG. 1 is a view illustrating a structure of a service-based 5G network;
FIG. 2 is a view illustrating a signal flow when a root-NSSI referenced by an NSI is activated under the assumption that an entity is not shared in a system;
FIG. 3 is a view illustrating a geographical activation procedure of an NSI according to one or more embodiments;
FIG. 4 is a view illustrating a geographical deactivation procedure of an NSI according to one or more embodiments;
FIG. 5 is a view illustrating a geographical activation procedure of an NSSI according to one or more embodiments;
FIG. 6 is a view illustrating a geographical activation procedure of an NSSI according to one or more embodiments; and
FIG. 7 is a view illustrating a configuration of a network entity according to one or more embodiments.

### [MODE FOR INVENTION]

Hereinafter, one or more embodiments are described in detail with reference to the accompanying drawings. The embodiments described, and the configurations shown in the drawings, are only examples, and various modifications may be made without departing from the scope and spirit of the disclosure.

In the drawings, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through one or more embodiments to be described below taken in conjunction with the accompanying drawings. However, the disclosure is not limited to one or more embodiments disclosed herein, and various changes may be made thereto. One or more embodiments disclosed herein are provided to inform one of ordinary skilled in the art of the category of the present disclosure. The same reference numeral may denote the same element.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in one or more embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

First, the terms used in one or more embodiments are defined as follows.
Network slice - A virtual communication network ensuring QoS/SLA disposed through a shared virtualized infrastructure.
Network slice instance (NSI) - An instance of the network slice.
Network slice subnet - A logical portion of the network slice.
Network slice subnet instance (NSSI) - A constitution part of the NSI. The NSSI may cover a partial technical domain (for example, core network).
Managed function (MF) - A concept of application-layer of the 5G network function (for example, access and mobility management function (AMF) or session management function (SMF).
Managed function instance - An instance of the MF.
Service level agreement (SLA)
Service level specification (SLS) - refers to the more technically oriented portion of the SLA.
Communication service management function (CSMF)
Network slice management function (NSMF) - A part of the 3GPP slicing management system in charge of management for the NSI, and functions as a higher level for the network slice subnet management function (NSSMF).
NSSMF - A part of the 3GPP slicing management system in charge of management of NSSIs and may be considered dependent on the NSMF or other NSSMFs.
Network slice subnet management function (root-NSSMF) - A unique NSSMF which is a higher level than other NSSMFs and has a direct relationship for the NSMF in the fully 3GPP-compliant architecture. According to one or more embodiments, the functionalities of the NSMF and the root-NSSMF may be merged into a single management system (for example, NSMF + root-NSSMF).
Network function management function (NFMF) - A part of the 3GPP slicing management framework capable of application level management of MFs executed on the virtualized network function (VNF), physical network function (PNF), and cloud-native network function (CNF).
Slicing management system - A system that manages one or more of the slicing entities. For example, it may be referred to as a management system or MS.
Slicing managed entity - A slicing entity managed by the slicing management system. For example, it may be referred to as a managed entity or a managed element (ME).
Network repository function (NRF) - A repository function storing information regarding other MFs.
Service profile - An object including SLA-related requirements raised for the NSI as well or an NSSAI when the NSI is assigned to the CSI.
Slice profile - An object including service level agreements (SLA)-related requirements raised for the NSSI or an NSSAI when an NSSI is assigned to the NSI or another NSSI.
Element management system (EMS)
Software defined network (SDN)
Operation support system (OSS)
Network function virtualization orchestrator (NFVO)
Network slice selection assistance information (NSSAI) - A set of call-processing-level identifiers of slices.

The 5G system architecture developed in the 3rd generation partnership project (3GPP) standardization may assume functional slices as managed entities called managed elements or managed functions (MF). MF refers to a logic application executed in the virtual network function (VNF), the physical network function (PNF), and the cloud-native network function (CNF). MFs may perform a predefined set of functions and communicate with each other via standardized interfaces called reference points.

Network slicing is a technique that allows creating logically separated networks (for example, slices) using different configurations and quality of service (QoS) requirements on a shared basic infrastructure.

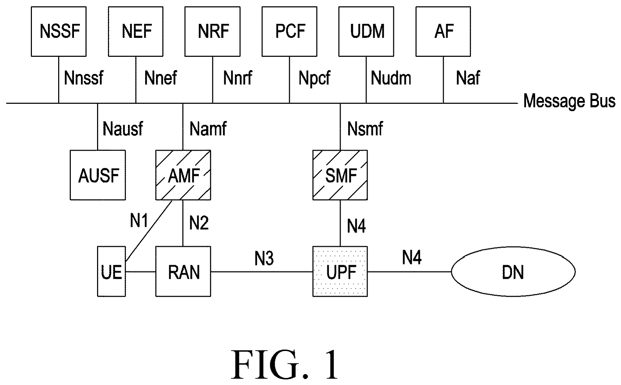

Creating a network slice assumes the occurrence of new instances of reusing slice-only MFs and MFs that may be shared between multiple slices. MFs may include dedicated MFs, such as the unified plane function (UPF) or the session management function (SMF), and shared MFs, such as the access and mobility management function (AMF), the network slicing selection function (NSSF), the user data management (UDM), and the network repository function (NRF). FIG. 1 illustrates the structure of such a service-based 5G network.

The management and orchestration (MANO) layer may organize slices, including decisions about generating new MF instances or reusing existing MF instances.

Meanwhile, in the 5G network, the management entities may be activated or deactivated (or locked or unlocked). The management entity may provide a service to the user through an activation task. The goal of activation and deactivation is to be able to quickly "switch on" and "switch off" the corresponding management entity without a lengthy configuration or deconfiguration process. However, it may take time to configure or instantiate the management entity for activating each management entity, and at the same time, an error may occur due to the provided service as the corresponding management entity does not reach the operational state but partially operates. All management entities may be first configured and instantiated, but may be inactive, which means that the service is not provided by the management entity. Activation may be performed after all management entities are set.

Meanwhile, the network slice instance NSI provides a service within a defined geographical coverage. Geographical coverage may range from an area (for example, building or stadium) to a city, geographical area, and the entire country. In some cases, the NSI may have the same coverage as the base, which is an unsliced mobile network.

Like the NSI, network slice subnets (NSSIs), for example, RAN NSSIs, may be geographically tied up due to the presence of physical components (wireless and antenna).

According to the 3GPP standard TS 28.541, the slicing the geographic coverage may be expressed as follows:
In the case of NSI, the coverage area may include a list of geographic coverage areas to be covered by the network slice as a 'coverageArea' attribute in the ServiceProfile.

In the case of NSSI, 'coverageAreaTAList' in SliceProfile may include a tacking area code (TAC) list that is an attribute of a wireless network element. Because the TAC may be shared by multiple RAN network elements in the same geographic coverage area, it may be used to define geographic coverage. The TAC may be used to divide a network into separate areas (tracking areas) for paging or the like. From a network slicing point of view, the TAC list may be regarded as NSI/NSSI geographic coverage. TACs are also used in 4G networks, and routing area code (RAC) and location area code (LAC) may be used in 2G/3G.

Meanwhile, according to 3GPP standards, activation/deactivation of management entities as well as NSSI and NSI may be expressed as a combination of operational state attributes and management state attributes of these management entities. For example, when the component (in this case, root-NSSI) is active (operational state = active, management state = unlocked), the NSI may be considered active (operationalState = active, administrativeState = unlocked). To reach this state, the upper management entity (for example, NSMF) may request the lower management entity (for example, NSSMF) to activate all components (for example, overlapping subnets, management functions).

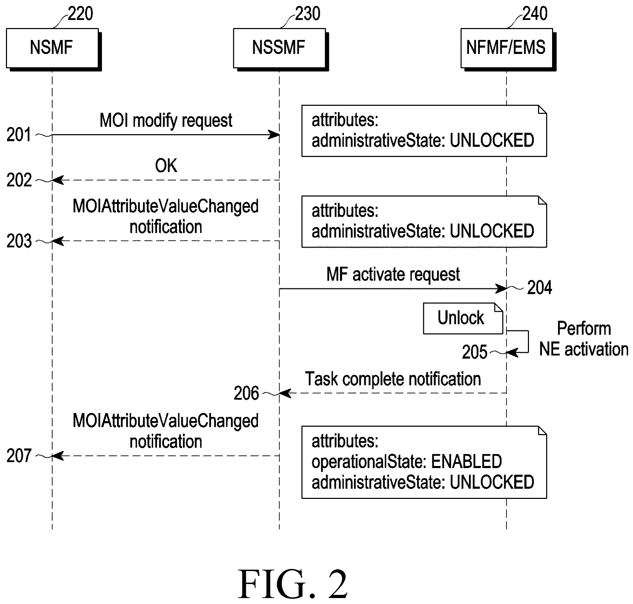

FIG. 2 is a view illustrating a signal flow when a root-NSSI referenced by an NSI is activated under the assumption that an entity is not shared in a system.

Referring to FIG. 2, in operation 201, the NSMF 220 may transmit a message requesting to modify a managed object instance (MOI) to the NSSMF 230, and in operation 202, the NSMF 220 may receive a response message from the NSSMF 230. In operation 203, the NSMF 220 may receive a notification message indicating that the MOI attribute value has been modified from the NSSMF 230. The attribute value of the attribute 'administrativeState' indicating the approved state in operations 201 to 203 may be "UNLOCKED" (unlocked).

In operation 204, the NSSMF 230 may transmit a message requesting activation of the MF to the NFMF/EMS 240, and in operation 205, activation of the corresponding network element NE may be performed. In operation 206, the NFMF/EMS 240 may notify the NSSMF 230 that task execution has been completed, and in operation 207, the NSMF 220 may receive a notification message indicating that the MOI attribute value has been modified from the NSSMF 230. In operation 207, the attribute value of the attribute 'administrativeState' indicating the approved state may be "UNLOCKED" (unlocked), and the attribute value of the attribute 'operationalState' indicating the operational state may be "ENABLED".

Referring to FIG. 2, it may be identified that the activation operation of the MF is performed without the intervention of the network operator. However, the network slice may cover a vast geographic coverage area, and the operator may want to partially activate or deactivate the network slice in a geographic coverage area selected from areas covered by the network slice. For example, when maintenance is partially performed in an area or a technical problem occurs, it may be appropriate to temporarily deactivate the network slice service at a location. Or, it may be appropriate to temporarily deactivate the network slice service at a place due to a request from the country. Or, it may be predicted or observed that the service provider may not be able to maintain a level of service in an area, and thus it may be appropriate to temporarily deactivate the network slice service at a location. Or, it may be appropriate to temporarily deactivate the slice service at a location due to a natural disaster or a customer's request. Or, it may be appropriate to flexibly activate the network slice service at a location for demonstration of the service, or to temporarily activate/deactivate the network slice service in an environment in which users are temporarily concentrated in an area such as a concert, a local festival, or a sports game, for example.

In this case, the change of the NSI may be performed by requesting a change of the NSI coverage area. This operation may involve an operation of modifying basic resources (NSSI and network elements) resulting in a failure service in a designated area, but this corresponds to a normal change rather than activation/deactivation.

Because such a change operation may be heavy and may involve instantiation or termination of resources along with an overall provision cycle, the operation may take a long time. Therefore, there is a need for a technology for efficiently activating or deactivating a network slice in a selected geographic coverage area.

The disclosure provides a procedure for activating or deactivating an NSI or NSSI in a selected geographic coverage area that is a subset of total coverage.

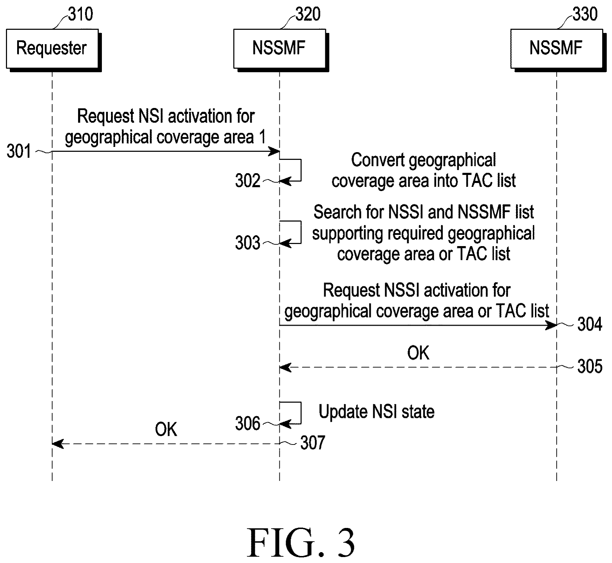

FIG. 3 is a view illustrating a geographical activation procedure of an NSI according to one or more embodiments. In FIG. 3, the NSMF 320 and the NSSMF 330 may be included in a network slice management system. In FIG. 3, it is assumed that the NSI already exists. The NSI may be composed of several nested NSSIs, and the NSI may cover several geographical coverage areas. Some geographic coverage areas may be in an active state (a state in which a virtualization or physical infrastructure exists to provide a service), and some geographic coverage areas may be in an inactive state (a state in which a virtualization or physical infrastructure exists but does not provide a service). It is assumed that the NSI has N geographic coverage areas (areas 1, 2, 3, ..., N) and is in an inactive state in the geographic coverage area 1.

Referring to FIG. 3, in operation 301, the requestor 310 may request the NSMF 320 to activate the NSI for the geographic coverage area 1. The requester 310 may be a service user or an external system other than a network slice management system such as a communication service management function (CSMF), operations support systems (OSS), and business support systems (BSS). The activation request is a specification of the geographical coverage area to be activated as follows and may include, for example, a list of similar codes indicating areas or the tracking area codes mapped to the geographical coverage areas, the geographical coordinates, names of regions, postal codes, or network function list. The activation request may include a plurality of geographical coverage areas. The plurality of geographic coverage areas included in the activation request may overlap each other, and some geographic coverage areas may be included in other geographic coverage areas.

In operation 302, the NSMF 320 may convert the geographic coverage area into a TAC list or similar area codes mapped to the geographic coverage areas. If the NSSMF 320 does not support the geographic coverage area, the NSMF 320 may convert the requested geographic coverage area into a similar area code or a TAC list mapped to the geographic coverage area understandable by the NSSMF 330. The conversion may be performed by internal database consulting of the NSMF 320 including the mapping rule, by inquiring an external system for translation, or by inquiring the NSSMF 330 for translation.

In operation 303, the NSMF 320 may find the list of NSSIs and NSSMFs supporting the geographic coverage area or TAC list. The NSMF 320 may find the list of NSSIs and NSSMFs supporting the geographic coverage area or TAC list. Operation 303 may be performed by consulting the internal database of the NSMF 320. When the NSMF 320 is unable to match the NSSI and the NSSMF with a geographic coverage area or TAC (for example, when a list of geographic coverage areas or TACs supportable by the NSSMF 330 is not known), all nested NSSIs may be included in the list.

In operation 304, the NSMF 320 may request the NSSMF 330 to activate the NSSI for the geographic coverage area or the TAC list, and the NSSMF 330 may selectively activate the NSSI in the geographic coverage area. In operation 305, the NSMF 320 may receive a response message OK from the NSSMF 330. In operation 304, the NSMF 320 may request the NSSMF 330 managing the NSSI to activate the coverage area or TAC (or similar code) selected in the NSSI. In a 3GPP-based system, the geographical coverage area of the NSSI may be expressed as a TAC list, and the geographical coverage area of the NSSI may be expressed in other ways, such as with the name of the coverage area.

In operation 306, the NSMF 320 may update the state of the NSI. The NSI for the geographic coverage area 1 may be in an active state. The NSMF 320 may update at least one of NSI administrativeState, NSI operationalState, NSI coverageArea administrativeState, NSI coverageAre operationState, and other state-related fields as the NSI state. In this case, the NSI coverageArea administrativeState is a field indicating whether the service is expected to be provided in the coverage area, and the NSI coverageAre operationState is a field describing whether the service is provided in the coverage area.

The NSI having the N geographical coverage areas (areas 1, 2, 3, ..., N) may be activated in the geographical coverage area 1.

Operations 304 to 306 each may be performed for all NSSIs supporting the geographic coverage area or TAC list.

In operation 307, the NSMF 320 may transmit a response message OK to the requester 310 in operation 301.

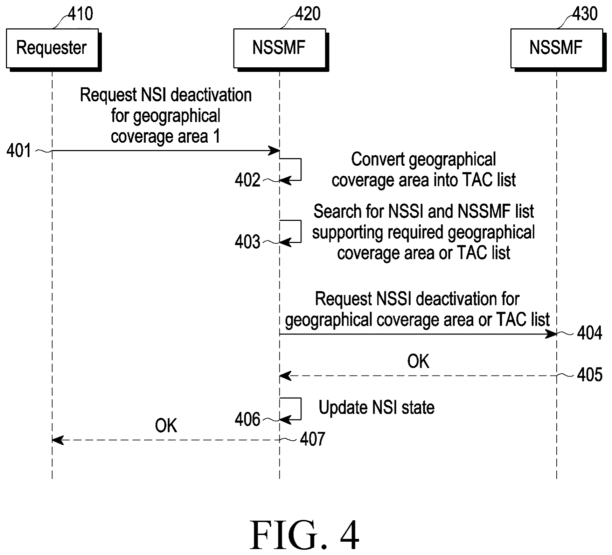

FIG. 4 is a view illustrating a geographical deactivation procedure of an NSI according to one or more embodiments. In FIG. 4, the NSMF 420 and the NSSMF 430 may be included in a network slice management system. In FIG. 4, it is assumed that the NSI already exists. The NSI consists of several nested NSSIs, and the NSI may cover several geographical coverage areas. Some geographic coverage areas may be in an active state (a state in which a virtualization or physical infrastructure exists to provide a service), and some geographic coverage areas may be in an inactive state (a state in which a virtualization or physical infrastructure exists but does not provide a service). It is assumed that the NSI has N geographic coverage areas (areas 1, 2, 3, ..., N) and is active in geographic coverage area 1.

Referring to FIG. 4, in operation 401, the requestor 410 may request the NSMF 320 to deactivate the NSI for the geographic coverage area 1. The requester 410 may be a service user, or an external system other than the network slice management system such as a communication service management function (CSMF), an OSS, or a BSS. The deactivation request is a specification of the geographical coverage area to be activated as follows and may include, for example, a list of similar codes indicating the tracking area codes mapped to the geographical coverage areas, the geographical coordinates, names of regions, postal codes, or network function list. The deactivation request may include a plurality of geographic coverage areas. The plurality of geographic coverage areas included in the deactivation request may overlap each other, and some geographic coverage areas may be included in other geographic coverage areas.

In operation 402, the NSMF 420 may convert the geographic coverage area into a TAC list or similar codes mapped to the geographic coverage areas. If the NSSMF 420 does not support the geographic coverage area, the NSMF 420 may convert the requested geographic coverage area into a similar code or a TAC list mapped to the geographic coverage area understandable by the NSSMF 430. The conversion may be performed by internal database consulting of the NSMF 420 including the mapping rule, by inquiring an external system for translation, or by inquiring the NSSMF 430 for translation.

In operation 403, the NSMF 420 may find the list of NSSIs and NSSMFs supporting the geographic coverage area or TAC list. The NSMF 420 may find the list of NSSIs and NSSMFs supporting the geographic coverage area or TAC list. Operation 403 may be performed by consulting the internal database of the NSMF 420. When the NSMF 420 is unable to match the NSSI and the NSSMF with a geographic coverage area or TAC (for example, when a list of geographic coverage areas or TACs supportable by the NSSMF 430 is not known), all nested NSSIs may be included in the list.

In operation 404, the NSMF 420 may request the NSSMF 430 to deactivate the NSSI for the geographic coverage area or the TAC list, and the NSSMF 330 may selectively deactivate the NSSI in the geographic coverage area. In operation 405, a response message OK may be received. In operation 404, the NSMF 420 may request the NSSMF 430 managing the NSSI to deactivate the coverage area or TAC (or similar code) selected in the NSSI. In a 3GPP-based system, the geographical coverage area of the NSSI may be expressed as a TAC list, and the geographical coverage area of the NSSI may be expressed in other ways, such as with the name of the coverage area.

In operation 406, the NSMF 420 may update the state of the NSI. The NSI for the geographic coverage area 1 may be in an inactive state. The NSMF 420 may update at least one of NSI administrativeState, NSI operationalState, NSI coverageArea administrativeState, NSI coverageAre operationState, and other state-related fields as the NSI state. In this case, the NSI coverageArea administrativeState is a field indicating whether the service is expected to be provided in the coverage area, and the NSI coverageAre operationState is a field describing whether the service is provided in the coverage area.

Operations 404 to 406 each may be performed for all NSSIs supporting the geographic coverage area or TAC list.

The NSI having the N geographical coverage areas (areas 1, 2, 3, ..., N) may be in an inactive state in the geographical coverage area 1.

In operation 407, the NSMF 420 may transmit a response message OK to the requester 410 in operation 401.

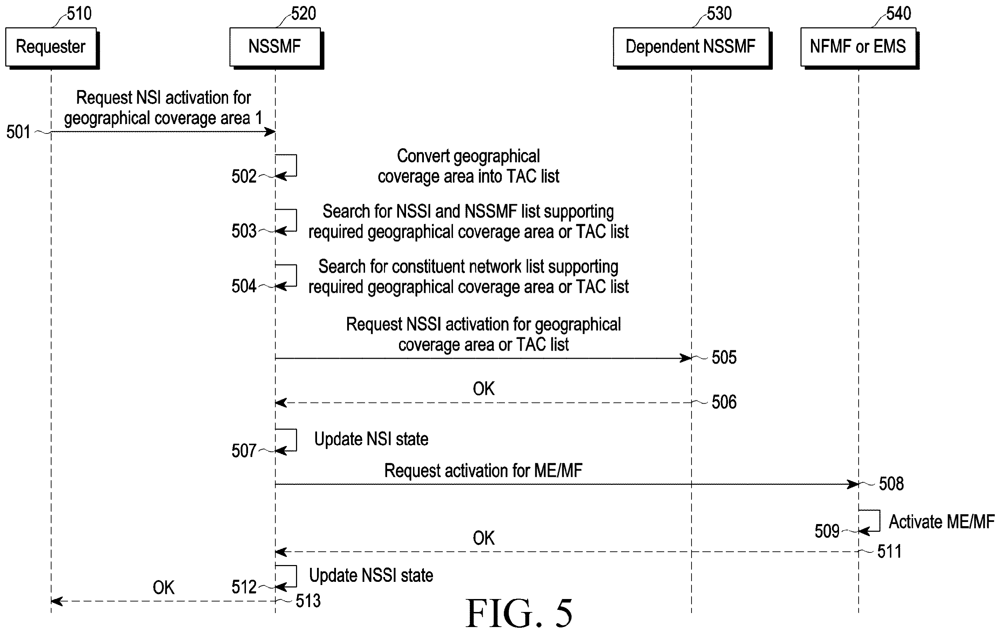

FIG. 5 is a view illustrating a geographical activation procedure of an NSSI according to one or more embodiments. In FIG. 5, the NSSMF 520 and the dependent NSSMF 530 may be included in a network slice management system. In FIG. 5, it is assumed that the NSSI already exists. The NSSI may include a plurality of network elements NE and/or several nested NSSIs. The NSSI may cover several geographical coverage areas. The geographical coverage of the NSSI may be expressed as a similar code list mapped to the geographical coverage area, tracking area code or coverage area. Some geographic coverage areas may be in an active state (a state in which a virtualization or physical infrastructure exists to provide a service), and some geographic coverage areas may be in an inactive state (a state in which a virtualization or physical infrastructure exists but does not provide a service). It is assumed that the NSSI has N geographic coverage areas (areas 1, 2, 3, ..., N) and is in an inactive state in the geographic coverage area 1.

Referring to FIG. 5, in operation 501, the requestor 510 may request the NSSMF 520 to activate the NSSI for the geographic coverage area 1. The requester 510 may be an NSMF, a service user, or an external system other than the network slice management system such as a communication service management function (CSMF), an OSS, or a BSS. The activation request is a specification of the geographical coverage area to be activated as follows and may include, for example, a list of similar codes indicating the tracking area codes mapped to the geographical coverage areas, the geographical coordinates, names of regions, postal codes, or network function list. The activation request may include a plurality of geographical coverage areas. The plurality of geographic coverage areas included in the activation request may overlap each other, and some geographic coverage areas may be included in other geographic coverage areas.

In operation 502, the NSSMF 520 may convert the geographic coverage area into a TAC list or similar codes mapped to the geographic coverage areas. If the NSSMF 520 does not support the geographic coverage area, the NSSMF 520 may convert the requested geographic coverage area into a similar code or a TAC list mapped to the geographic coverage area understandable by the NSSMF 530. The conversion may be performed by internal database consulting of the NSSMF 520 including the mapping rule, by inquiring an external system for translation, or by inquiring the NSSMF 530 for translation.

In operation 503, the NSSMF 520 may find the list of nested NSSIs and dependent NSSMFs supporting the geographic coverage area or TAC list. The NSSMF 520 may find the list of NSSIs and related NSSMFs supporting the geographic coverage area or TAC list. Operation 503 may be performed by consulting the internal database of the NSSMF 520. When the NSSMF 520 is unable to match the NSSI and the NSSMF with a geographic coverage area or TAC (for example, when a list of geographic coverage areas or TACs supportable by the NSSMF 530 is not known), all nested NSSIs may be included in the list.

In operation 504, the NSSMF 520 may find a list of constituent network elements supporting the geographical coverage area or TAC list for a dependent NSSMF 530. The dependent NSSMF 530 may find a list of component network elements supporting the geographic coverage area or TAC list and related EMSs managing the same. This operation may be performed by consulting the internal database of the NSSMF 530.

In operation 505, the NSSMF 520 may request the dependent NSSMF 530 to activate the NSSI for the geographic coverage area or TAC list. The NSSMF 520 may request the dependent NSSMF 530 managing the NSSI to activate the NSSI for the geographic coverage area or TAC (or similar codes) list, and the dependent NSSMF 530 may selectively activate the NSSI in the geographic coverage area. In operation 506, a response message OK may be received. In a 3GPP-based system, the geographical coverage area of the NSSI may be expressed as a TAC list, and the geographical coverage area of the NSSI may be expressed in other ways, such as with the name of the coverage area.

In operation 507, the NSSMF 520 may update the state of the NSI. The NSSMF 520 may update at least one of NSI administrativeState, NSI operationalState, NSI coverageArea administrativeState, NSI coverageAre operationState, and other state-related fields as the NSI state. In this case, the NSI coverageArea administrativeState is a field indicating whether the service is expected to be provided in the coverage area, and the NSI coverageAre operationState is a field describing whether the service is provided in the coverage area.

Operations 505 to 507 each may be performed for all NSSIs supporting the geographic coverage area or TAC list.

In operation 508, the NSSMF 520 may request the NFMF/EMS 540 to activate the network element ME/network function MF which is currently inactive. The network element ME/network function MF may be estimated based on a geographic coverage area or TAC (or part thereof).

In operation 509, the NFMF/EMS 540 may activate the network element, and in operation 511, the NFMF/EMS 540 may transmit a response message OK to the NSSMF 520. In operation 509, the network element management system or the network function (MF) management system may activate the network element (ME)/network function (MF). Procedures for activation of the network element ME/network function MF may include:
Reconfiguring network elements to enable service;
Completing network element configuration to enable service; or
Activating network communication.

In operation 512, the NSSMF 520 may update the state of the NSSI. The NSSMF 520 may update at least one of NSI administrativeState, NSI operational State, NSI coverageArea administrativeState, NSI coverageAre operationState, and other state-related fields as the NSI state. In this case, the NSI coverageArea administrativeState is a field indicating whether the service is expected to be provided in the coverage area, and the NSI coverageAre operationState is a field describing whether the service is provided in the coverage area.

Operations 508 to 512 each may be performed for constituent management elements supporting the geographic coverage area or TAC list.

The NSSI having the N geographical coverage areas (areas 1, 2, 3, ..., N) may be activated in the geographical coverage area 1.

In operation 513, the NSSMF 520 may transmit a response message OK to the request in operation 501 to the requester 510.

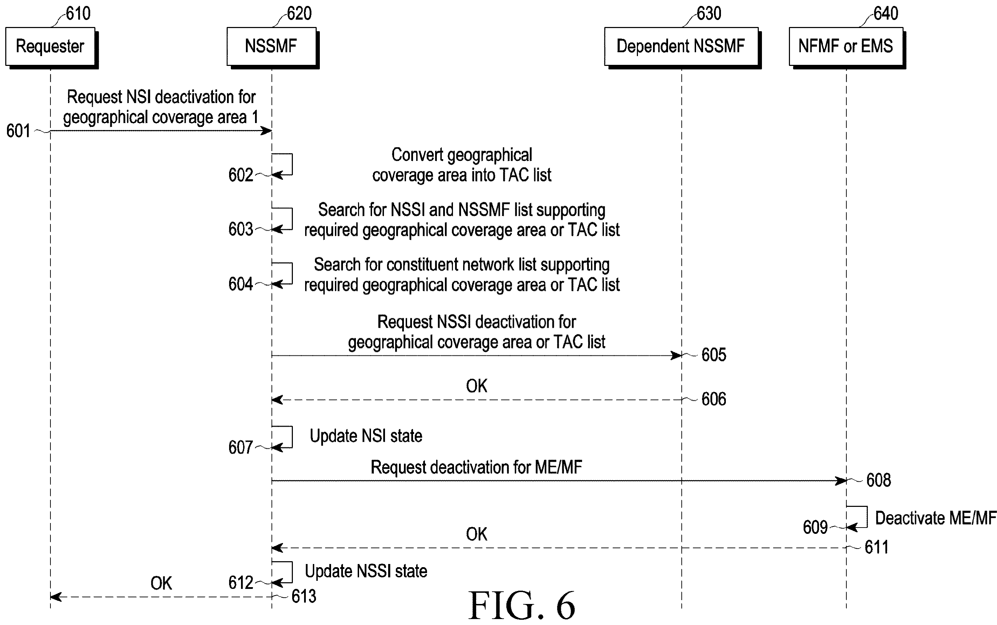

FIG. 6 is a view illustrating a geographical activation procedure of an NSSI according to one or more embodiments. In FIG. 6, the NSSMF 620 and the dependent NSSMF 630 may be included in a network slice management system. In FIG. 6, it is assumed that the NSSI already exists. The NSSI may include a plurality of network elements NE and/or several nested NSSIs. The NSSI may cover several geographical coverage areas. The geographical coverage of the NSSI may be expressed as a similar code list mapped to the geographical coverage area, tracking area code or coverage area. Some geographic coverage areas may be in an active state (a state in which a virtualization or physical infrastructure exists to provide a service), and some geographic coverage areas may be in an inactive state (a state in which a virtualization or physical infrastructure exists but does not provide a service). It is assumed that the NSSI has N geographic coverage areas (areas 1, 2, 3, ..., N) and is active in geographic coverage area 1.

Referring to FIG. 6, in operation 501, the requestor 610 may request the NSSMF 620 to deactivate the NSSI for the geographic coverage area 1. The requester 610 may be an NSMF, a service user, or an external system other than the network slice management system such as a communication service management function (CSMF), an OSS, or a BSS. The deactivation request is a specification of the geographical coverage area to be deactivated as follows and may include, for example, a list of similar codes indicating the tracking area codes mapped to the geographical coverage areas, the geographical coordinates, names of regions, postal codes, or network function list. The deactivation request may include a plurality of geographic coverage areas. The plurality of geographic coverage areas included in the deactivation request may overlap each other, and some geographic coverage areas may be included in other geographic coverage areas.

In operation 602, the NSSMF 620 may convert the geographic coverage area into a TAC list or similar codes mapped to the geographic coverage areas. If the NSSMF 620 does not support the geographic coverage area, the NSSMF 620 may convert the requested geographic coverage area into a similar code or a TAC list mapped to the geographic coverage area understandable by the NSSMF 630. The conversion may be performed by internal database consulting of the NSSMF 620 including the mapping rule, by inquiring an external system for translation, or by inquiring the NSSMF 630 for translation.

In operation 603, the NSSMF 620 may find the list of nested NSSIs and dependent NSSMFs supporting the geographic coverage area or TAC list. The NSSMF 620 may find the list of NSSIs and related NSSMFs supporting the geographic coverage area or TAC list. Operation 603 may be performed by consulting the internal database of the NSSMF 620. When the NSSMF 620 is unable to match the NSSI and the NSSMF with a geographic coverage area or TAC (for example, when a list of geographic coverage areas or TACs supportable by the NSSMF 630 is not known), all nested NSSIs may be included in the list.

In operation 604, the NSSMF 620 may find a list of constituent network elements supporting the geographical coverage area or TAC list for a dependent NSSMF 630. The dependent NSSMF 630 may find a list of component network elements supporting the geographic coverage area or TAC list and related EMSs managing the same. This operation may be performed by consulting the internal database of the NSSMF 630.

In operation 605, the NSSMF 620 may request the dependent NSSMF 630 to deactivate the NSSI for the geographic coverage area or the TAC list. The NSSMF 620 may request the dependent NSSMF 630 managing the NSSI to deactivate the NSSI for the geographic coverage area or TAC (or similar codes) list, and the dependent NSSMF 630 may selectively deactivate the NSSI in the geographic coverage area. In operation 606, a response message OK may be received. In a 3GPP-based system, the geographical coverage area of the NSSI may be expressed as a TAC list, and the geographical coverage area of the NSSI may be expressed in other ways, such as with the name of the coverage area.

In operation 607, the NSSMF 620 may update the state of the NSI. The NSSMF 620 may update at least one of NSI administrativeState, NSI operationalState, NSI coverageArea administrativeState, NSI coverageAre operationState, and other state-related fields as the NSI state. In this case, the NSI coverageArea administrativeState is a field indicating whether the service is expected to be provided in the coverage area, and the NSI coverageAre operationState is a field describing whether the service is provided in the coverage area.

Operations 605 to 607 each may be performed for all NSSIs supporting the geographic coverage area or TAC list.

In operation 608, the NSSMF 620 may request the NFMF/EMS 640 to deactivate the currently active network element ME/network function MF. The network element ME/network function MF may be estimated based on a geographic coverage area or TAC (or part thereof).

In operation 609, the NFMF/EMS 640 may deactivate the network element, and in operation 611, the NFMF/EMS 640 may transmit the response message OK to the NSSMF 620. In operation 609, the network element management system or the network function (MF) management system may deactivate the network element (ME)/network function (MF). Procedures for deactivation of the network element ME/network function MF may include:
Reconfiguring network elements to enable service;
Completing network element configuration to enable service; or
Activating network communication.

In operation 612, the NSSMF 620 may update the state of the NSSI. The NSSMF 620 may update at least one of NSI administrativeState, NSI operationalState, NSI coverageArea administrativeState, NSI coverageAre operationState, and other state-related fields as the NSI state. In this case, the NSI coverageArea administrativeState is a field indicating whether the service is expected to be provided in the coverage area, and the NSI coverageAre operationState is a field describing whether the service is provided in the coverage area.

Operations 608 to 612 each may be performed for constituent management elements supporting the geographic coverage area or TAC list.

The NNSI having the N geographical coverage areas (areas 1, 2, 3, ..., N) may be in an inactive state in the geographical coverage area 1.

In operation 613, the NSSMF 520 may transmit a response message OK to the request in operation 601 to the requester 610.

Network slice entities such as NSI or NSSI may provide two types of states. For example, 3GPP may define NSI and NSSI as follows.
· NSI or NSSI activation approved state (administrativeState) - A state that describes whether the service is expected to be provided by NSI or NSSI. This state may be changed to any one of UNLOCKED/LOCKED in the activation/deactivation operation. UNLOCKED is a state where NSI or NSSI is expected to provide the service, and LOCKED is a state where NSI or NSSI is not expected to provide the service.
· operational state (OperationalState) of NSI or NSSI - A state that describes whether a service is actually provided by NSI or NSSI. This state may be determined as any one of UNLOCKED/LOCKED based on the actual entity and its configuration state. UNLOCKED is a state where NSI or NSSI provides the service, and LOCKED is a state where NSI or NSSI does not provide the service.

In one or more embodiments as illustrated in FIGS. 3 to 6, the NSI or NSSI data model may be selectively enhanced to efficiently track the state of a coverage area or TACs. Each coverage area in the list of the NSI or NSSI data models may include a coverage area activation approved state (CoverageArea administrativeState) attribute and a coverage area operational state (CoverageArea operational state) attribute.

The coverage area activation approved state (CoverageArea administrativeState) attribute indicates an attribute for each coverage area supported by the NSI or NSSI. This attribute may be used to determine whether the coverage area is expected to be active or inactive. This attribute may have UNLOCKED or LOCKED as an attribute value. The attribute value UNLOCKED indicates that the service is expected to be provided in the coverage area, and alternatively, attribute values such as TRUE and ACTIVE may be used. The attribute value LOCKED indicates that the service is not expected to be provided in the coverage area, and an attribute value such as FALSE, INACTIVE, for example, may be used as an alternative.

The coverage area operational state (CoverageArea operational State) attribute indicates an attribute for each coverage area supported by the NSI or NSSI. The attribute value of this attribute may be determined as ENABLED or DISABLED according to the service state of the corresponding area. The attribute value ENABLED may indicate a case where all constituent NSSIs or NEs supporting a coverage area have administrativeState=UNLOCKED and operationalState=ENABLED, or may indicate a case where constituent NSSI-related coverageArea or TAC administrativeState=UNLOCKED and operationalState=ENABLED and all NEs supporting a coverage area are in an operational state and provide a service. The attribute value DISABLED may indicate a case where the ENABLED condition is not met.

The attributes and attribute values of the coverage area are defined in Table 1.

**[Table 1]**

| Attribute name | Related to | Value | Meaning | How to derive it? |
|---|---|---|---|---|
| CoverageArea administrative State | Per single coverageArea associated with NSI or NSSI | UNLOCK ED | Service is expected to be provided in this coverage area | Set by request |
| | | LOCKED | Service is not expected to be provided in this coverage area | Set by request |
| CoverageArea operationalState | Per single coverageArea associated with NSI or NSSI | ENABLED | Service is provided in this coverage area | Can be calculated according to following rules |
| | | | | (alt.1) when all constituent NSSIs or NE supporting this area have administrativeState=UNLOCK |
| | | | | ED and operationalState=ENABLED |
| | | | | (alt.2) when in constituent NSSIs associated coverateArea or TAC administrativeState=UNLOCK ED and operationalState=ENABLED and all NEs supporting this area are operational and providing service |
| | | DISABLED | Service is not provided in this coverage area | Calculated based on conditions: when ENABLED conditions are not met |

In Table 1, the attribute values are described based on 3GPP, but attribute values such as true/false, active/inactive, for example, may be used. In one or more 3GPP-based embodiments, coverage areas may be used in the NSI and the NSMF.

Meanwhile, similar to the coverage area state (CoverageArea state), the NSI or NSSI data model may be enhanced with the TA state. Each TA in the NSI or NSSI list defined as a TAC may include a TA activation approved state (Tracking Area AdministrativeState) attribute and a TA operational state (Tracking Area OperationState) attribute.

The TA activation approved state (Tracking Area administrativeState) attribute indicates an attribute for each TA supported by NSI or NSSI. This attribute may be used to determine whether TA is expected to be active or inactive. This attribute may have UNLOCKED or LOCKED as an attribute value. The attribute value UNLOCKED indicates that the service is expected to be provided by the TA, and as an alternative, attribute values such as TRUE and ACTIVE may be used. The attribute value LOCKED indicates that the service is not expected to be provided in the TA, and as an alternative, attribute values such as FALSE and INACTIVE may be used.

The TA operational state (Tracking Area operational State) attribute indicates an attribute for each coverage area supported by the NSI or NSSI. The attribute value of this attribute may be determined as ENABLED or DISABLED according to the service state of the TA. The attribute value ENABLED may indicate a case where all constituent NSSIs or NEs supporting a coverage area have administrativeState=UNLOCKED and operationalState=ENABLED, or may indicate a case where constituent NSSI-related coverageArea or TAC administrativeState=UNLOCKED and operationalState=ENABLED and all NEs supporting a coverage area are in an operational state and provide a service.

The attribute value DISABLED may indicate a case where the ENABLED condition is not met.

The attributes and attribute values of TA are defined in Table 2.

**[Table 2]**

| Attribute name | Related to | Value | Meaning | How to derive it? |
|---|---|---|---|---|
| Tracking Area administrative State | Per single Tracking Area associated with NSI or NSSI | UNLOCKED | Service is expected to be provided in this Tracking Area | Set by request |
| | | LOCKED | Service is not expected to be provided in this Tracking Area | Set by request |
| Tracking Area operationalState | Per single Tracking Area associated with NSI or NSSI | ENABLED | Service is provided in this Tracking Area | Can be calculated according to following rules |
| | | | | (alt.1) when all constituent NSSIs or NE supporting this area have administrativeState=UNLOCK ED and operationalState=ENABLED |
| | | | | (alt.2) when in constituent NSSIs associated Tracking Area or TAC administrativeState=UNLOCK ED and operationalState=ENABLED and all NEs supporting this area are operational and providing service |
| | | DISABLED | Service is not provided in this Tracking Area | Calculated based on conditions: when ENABLED conditions are not met |

Table 2 describes attribute values based on 3GPP, but attribute values, such as true/false, active/inactive, for example, may be used. In one or more 3GPP-based embodiments, coverage areas may be used in the NSI and the NSMF.

A method performed by a first network entity in a wireless communication system supporting a network slice, according to one or more embodiments, may include receiving, from a second network entity, an activation or deactivation request of a network slice instance (NSI) for a first geographical coverage area, searching for a list of a network slice subnet instance (NSSI) and a network slice subnet management entity function (NSSMF) supporting the first geographical coverage area or an area code list mapped to the first geographical coverage area, and requesting a third network entity to activate or deactivate the NSSI mapped to the area code list or the first geographical coverage area.

In one or more embodiments, the NSI may have a plurality of geographical coverage areas including the first geographical coverage area.

In one or more embodiments, the second network entity may be one of a user device, a communication service management function (CSMF) entity, an operations support systems (OSS), and a business support systems (BSS).

In one or more embodiments, the activation or deactivation request of the NSI may include at least one of an area code mapped to the first geographical coverage area, a geographical coordinate of the first geographical coverage area, a geographical name of the first geographical coverage area, a postal code of the first geographical coverage area, or a network function list of the first geographical coverage area.

In one or more embodiments, the activation or deactivation request of the NSI further may include another geographical coverage area in addition to the first geographical coverage area, and the first geographical coverage area and the other geographical coverage area may overlap each other.

In one or more embodiments, the method may further include converting the first geographical coverage area included in the activation or deactivation request of the NSI into an area code.

In one or more embodiments, the method may further include updating a state of the NSI based on requesting to activate or deactivate the NSSI.

In one or more embodiments, updating the state of the NSI may be configured to update at least one of an NSI administrativeState, an NSI operationalState, an NSI coverageArea administrativeState, or an NSI coverageAre operationState.

In one or more embodiments, requesting to activate or deactivate the NSSI and updating the state of the NSI may be performed on each of all NSSIs supporting the first geographical coverage area or the area code list.

In one or more embodiments, the second network entity may be a network slice management entity function (NSMF), the third network entity may be an NSSMF, and the second network entity and the third network entity may be included in a network slice system.

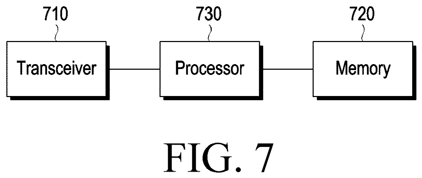

FIG. 7 is a view illustrating a configuration of a network device according to one or more embodiments. The network device shown in FIG. 7 may be any one of the requestor, NSMF, NSSMF, NFMF, and EMS shown in FIGS. 3 to 6.

As shown in FIG. 7, a network device of the disclosure may include a transceiver 710, memory 720, and a processor 730. The processor 730, transceiver 710, and memory 720 of the network device may be operated according to the above-described network device communication method. However, the components of the network device are not limited thereto. For example, the network device may include more or fewer components than the above-described components. The processor 730, the transceiver 710, and the memory 720 may be implemented in the form of a single chip.

The transceiver 710 collectively refers to the receiver of the network device and the transmitter of the network device and may transmit and receive signals to/from a UE or another network device. In this case, the signals transmitted/received with the base station may include control information and data. To that end, the transceiver 710 may include a radio frequency (RF) transmitter for frequency-up converting and amplifying signals transmitted and an RF receiver for low-noise amplifying signals received and frequency-down converting the frequency of the received signals. However, this is one example of the transceiver 710, and the components of the transceiver 710 are not limited to the RF transmitter and the RF receiver. The transceiver 710 may include a wired/wireless transceiver and may include various components for transmitting/receiving signals.

Further, the transceiver 710 may receive signals via a communication channel (for example, a radio channel), output the signals to the processor 730, and transmit signals output from the processor 730 via a radio channel.

Further, the transceiver 710 may receive the communication signal and output it to the processor and transmit the signal output from the processor to the UE or network device through the wired/wireless network.

The memory 720 may store programs and data for the operation of the network device. Further, the memory 720 may store control information or data that is included in the signal obtained by the network device. The memory 720 may include a storage medium, such as ROM, RAM, hard disk, CD-ROM, and DVD, or a combination of storage media.

The processor 730 may control a series of processes for the network device to be able to operate according to the one or more embodiments. The processor 730 may include at least one processor. The methods according to one or more embodiments may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to one or more embodiments.

A first network entity performing communication in a wireless communication system supporting a network slice, according to one or more embodiments, may include memory; and a transceiver and at least one processor operatively connected to the memory and the transceiver. The at least one processor may be configured to receive, from a second network entity, an activation or deactivation request of a network slice instance (NSI) for a first geographical coverage area, search for a list of a network slice subnet instance (NSSI) and a network slice subnet management entity function (NSSMF) supporting the first geographical coverage area or an area code list mapped to the first geographical coverage area, and request a third network entity to activate or deactivate the NSSI mapped to the area code list or the first geographical coverage area.

In one or more embodiments, the NSI may have a plurality of geographical coverage areas including the first geographical coverage area.

In one or more embodiments, the second network entity may be one of a user device, a communication service management function (CSMF) entity, an operations support systems (OSS), and a business support systems (BSS).

In one or more embodiments, the activation or deactivation request of the NSI may include at least one of an area code mapped to the first geographical coverage area, a geographical coordinate of the first geographical coverage area, a geographical name of the first geographical coverage area, a postal code of the first geographical coverage area, or a network function list of the first geographical coverage area.

In one or more embodiments, the activation or deactivation request of the NSI further may include another geographical coverage area in addition to the first geographical coverage area, and the first geographical coverage area and the other geographical coverage area may overlap each other.

In one or more embodiments, the at least one processor may be configured to convert the first geographical coverage area included in the activation or deactivation request of the NSI into an area code.

In one or more embodiments, the at least one processor may be configured to update a state of the NSI based on requesting to activate or deactivate the NSSI.

In one or more embodiments, the at least one processor may be configured to update the state of the NSI by updating at least one of an NSI administrativeState, an NSI operationalState, an NSI coverageArea administrativeState, or an NSI coverageAre operationState.

In one or more embodiments, the at least one processor may be configured to request to activate or deactivate the NSSI for each of all NSSIs supporting the first geographical coverage area or the area code list and to update the state of the NSI.

In one or more embodiments, the second network entity may be a network slice management entity function (NSMF), the third network entity may be an NSSMF, and the second network entity and the third network entity may be included in a network slice system.

Example one or more embodiments have been described above. The one or more embodiments are merely examples, and it will be appreciated by one of ordinary skill in the art various changes may be made thereto without departing from the scope of the disclosure. Therefore, the disclosed embodiments should be considered from an illustrative, rather than a limiting, point of view.

## Claims

1. A first network entity performing communication in a wireless communication system supporting a network slice, comprising:
memory storing instructions;
a transceiver; and
at least one processor operatively connected to the memory and the transceiver,
wherein the at least one processor is configured to execute the instructions to cause the first network entity to:
receive, from a second network entity, a request to activate or deactivate a network slice instance (NSI) for a first geographical coverage area;
search for a list comprising at least one of:
at least one network slice subnet instance (NSSI), or
at least one network slice subnet management entity function (NSSMF); and
send a request to a third network entity to activate or deactivate an NSSI,
wherein the at least one NSSI and the at least one NSSMF each support at least one of:
the first geographical coverage area, or
an area code list mapped to the first geographical coverage area, and
wherein the NSSI is mapped to at least one of:
the first geographical coverage area, or
the area code list.

2. The first network entity of claim 1, wherein the NSI comprises a plurality of geographical coverage areas comprising the first geographical coverage area.

3. The first network entity of claim 1, wherein the second network entity comprises:
a user device;
a communication service management function (CSMF) entity;
an operations support systems (OSS); or
a business support systems (BSS).

4. The first network entity of claim 1, wherein the request from the second network entity comprises at least one of an area code mapped to the first geographical coverage area, a geographical coordinate of the first geographical coverage area, a geographical name of the first geographical coverage area, a postal code of the first geographical coverage area, or a network function list of the first geographical coverage area.

5. The first network entity of claim 1, wherein the request to the third network entity further comprises a second geographical coverage area, and
wherein the first geographical coverage area and the second geographical coverage area overlap with each other.

6. The first network entity of claim 1, wherein the at least one processor is configured to execute the instructions to cause the first network entity to:
convert the first geographical coverage area into an area code; and
include the area code in the request to the third network entity.

7. The first network entity of claim 1, wherein the at least one processor is configured to execute the instructions to cause the first network entity to: apply an update to a state of the NSI based on sending the request to the third network entity,
wherein the update to the state comprises a first update to at least one of: an NSI administrativeState, an NSI operationalState, an NSI coverageArea administrativeState, or an NSI coverageAre operationState,
wherein the at least one processor is configured to execute the instructions to cause the first network entity to:
send the request to the third network entity to activate or deactivate a plurality of NSSIs; and
apply the update to the state of the NSI with respect to the plurality of NSSIs.

8. The first network entity of claim 1, wherein the second network entity is a network slice management entity function (NSMF),
wherein the third network entity is an NSSMF, and
wherein the second network entity and the third network entity are included in a network slice system.

9. A method performed by a first network entity in a wireless communication system supporting a network slice, the method comprising:
receiving, from a second network entity, a request to activate or deactivate a network slice instance (NSI) for a first geographical coverage area;
searching for a list including at least one of at least one network slice subnet instance (NSSI) or at least one network slice subnet management entity function (NSSMF); and
sending a request to a third network entity to activate or deactivate an NSSI,
wherein the at least one NSSI and the at least one NSSMF each support at least one of:
the first geographical coverage area, or
an area code list mapped to the first geographical coverage area, and
wherein the NSSI is mapped to at least one of:
the first geographical coverage area, or
the area code list.

10. The method of claim 9, wherein the NSI includes a plurality of geographical coverage areas including the first geographical coverage area.

11. The method of claim 9, wherein the request from the second network entity comprises at least one of an area code mapped to the first geographical coverage area, a geographical coordinate of the first geographical coverage area, a geographical name of the first geographical coverage area, a postal code of the first geographical coverage area, or a network function list of the first geographical coverage area.

12. The method of claim 9, wherein the request to the third network entity further comprises a second geographical coverage area, and
wherein the first geographical coverage area and the second geographical coverage area overlap with each other.

13. The method of claim 9, further comprising converting the first geographical coverage area into an area code; and
including the area code in the request to the third network entity.

14. The method of claim 9, further comprising applying an update to a state of the NSI based on sending the request to the third network entity.

15. The method of claim 14, wherein the applying the update to the state comprises a first update to at least one of an NSI administrativeState, an NSI operationalState, an NSI coverageArea administrativeState, or an NSI coverageAre operationState,
wherein the sending the request to the third network entity is to activate or deactivate a plurality of NSSIs, and
wherein the applying the update to the state of the NSI is performed with respect to the plurality of NSSIs.
